# EUROPÄISCHE PATENTSCHRIFT

(11) **EP 0 455 975 B1**
(45) Veröffentlichungstag und Bekanntmachung des Hinweises auf die Patenterteilung: **13.10.1993**
(21) Anmeldenummer: 91104590.4
(22) Anmeldetag: 23.03.1991
(51) Int. Cl.: B60J 7/02

(54) **Rahmen für ein Fahrzeug-Schiebedach oder -Schiebehebedach**
Frame for sliding or sliding and tilting sunroof for vehicle
Cadre pour toit coulissant ou pour toit coulissant et basculant de véhicule

(30) Priorität: 07.05.1990 DE 4014487
(43) Veröffentlichungstag der Anmeldung: 13.11.1991
(73) Patentinhaber: Webasto AG Fahrzeugtechnik, D-82131 Stockdorf (DE)
(72) Erfinder: Bienert, Horst, W-8035 Gauting (DE)

(56) Entgegenhaltungen:
- EP-A- 0 363 912
- DE-A- 2 836 801
- DE-A- 3 532 103
- DE-A- 3 831 045

## Beschreibung

Die Erfindung betrifft einen Rahmen für ein Fahrzeug-Schiebedach oder -Schiebehebedach, der in eine in einer festen Dachfläche vorgesehenen Dachöffnung einsetzbar ist und eine Rahmenöffnung begrenzt, welcher Rahmen zwei parallel zur Längsachse des Fahrzeugs verlaufende, im Querabstand angeordnete und aus Metall bestehende Seitenteile, ein Vorderteil und wenigstens ein Querteil aufweist, wobei die Seitenteile biegesteife Antriebskabel führen, mittels welchen Führungsglieder für einen Deckel längs der Seitenteile geführt bewegbar sind und die mit einer Antriebseinrichtung am Vorderteil zusammenarbeiten, wobei das Vorderteil als Übergang zu den Längsteilen Fehlbereiche aufweist.

Aus DE-A-28 36 801 ist ein Verfahren zum Zusammenbau eines Stahlkurbeldachs für ein Fahrzeug bekannt. Hierbei werden vor der Montage am Fahrzeug zunächst ein Ober- und Unterteil einer vorderen Kabelführung zu einer Einheit verbunden, wobei in der Kabelführung biegesteife Antriebskabel geführt sind, die mit einer Antriebseinrichtung in Form einer Kurbel am Vorderteil dieser Einheit zusammenarbeiten. Danach werden die seitlichen Führungsschienen über die Antriebskabel mit dieser Einheit verbunden. Diese Verfahrensweise ist für ein Schiebedach oder Schiebehebedach bestimmt. Hierbei wird eine vormontierte Palette gebildet, die zu gegebener Zeit ins Fahrzeug, beispielsweise am Montageband, eingebaut werden kann. Hierbei handelt es sich um einen mehrteiligen Rahmen, der aus Stahlteilen besteht und ein Vorderteil, zwei im Abstand angeordnete Seitenteile und zwei die Seitenteile verbindende Querteile hat. Die Ober- und Unterteile im Bereich des Vorderteils begrenzen einen Kabelführungskanal, in dem die biegesteifen Antriebskabel laufen. Auch umfaßt das Vorderteil als Übergang zu den Längsteilen dienende Eckbereiche, die mit den Längsteilen durch Schweißen o.dgl. verbunden werden. Hierbei liegen die Kabelführungen innerhalb der in die feste Dachfläche geschnittenen Dachöffnung, so daß der Öffnungsbereich dieses Schiebedachs oder Schiebehebedachs hinsichtlich seinen Abmessungen durch den mehrteiligen Rahmen vermindert wird. Ferner sind die Teile des mehrteiligen Rahmens aus Metall, wie Stahl, hergestellt, so daß der mehrteilige Rahmen gewichtsmäßig schwer wird und die Höhe desselben relativ groß ist, was zu einer Einschränkung der Kopffreiheit bei einem solchen in ein Fahrzeug eingebautes Schiebedach oder Schiebehebedach führt. Zusätzlich ist im Vorderteil noch eine Federklammer zur Verschleißverringerung bei den sich bewegenden biegesteifen Antriebskabeln vorgesehen. Zusätzlich sind gesonderte Wasserleitbleche vorhanden, die an den Rahmenteilen angebracht werden können. Hierdurch wird die Montage dieses mehrteiligen Rahmens zeitaufwendig und kostenintensiv.

Aus DE-A-34 19 901 ist ein Einbausatz für Schiebedächer, insbesondere für Oberfirst-Schiebedacher bekannt, der von einem an der festen Dachfläche anbringbaren Rahmen gebildet wird, der mehrteilig ausgelegt ist. Die Längsteile desselben bilden Führungsschienenteile und sind als Leichtmetallstrangprofil ausgebildet. Die anderen Teile dieses mehrteiligen, rahmenförmigen Einbausatzes sind als Blechteile, d.h. als Metallblechteile, ausgebildet.

Aus DE-A-35 25 320 ist eine Schiebedachkassette für Kraftfahrzeuge bekannt, welche flach baut und eine komplett vormontierbare Einheit bildet. Hierbei sind die Längsteile der Kassette, welche als Führungsschienen dienen, als Zuschnitte eines fortlaufenden Profilmaterials ausgebildet, welche über quer verlaufende Blechformteile miteinander verbunden sind. Die Führungsschienen bzw. die Längsteile sind mit wenigstens einem der Blechformteile mittels einer Steck- und Fügeverbindung oder Klebung verbunden. Diese Fügeverbindung oder Klebverbindung ist zusätzlich beispielsweise durch Schweißpunkte, Nieten, Schrauben oder Flänschbord gesichert. Diese Schiebedachkassette läßt sich ohne große Kosten an verschiedene Dachgrößen von Fahrzeugen anpassen, wobei das Profilmaterial der Führungsschienen vorzugsweise ein Leichtmetallstrangprofilmaterial ist.

Auch bei diesen voranstehend genannten Ausbildungsformen ergeben sich im wesentlichen dieselben Schwierigkeiten wie sie zuvor im Zusammenhang mit der DE-A-28 36 801 und der EP-A-0 363 912 erläutert worden sind.

Schließlich ist aus der DE-A-35 32 103 eine Rahmenanordnung für ein Fahrzeugdach bekannt, bei der der Rahmen einteilig ausgelegt und aus Kunststoff hergestellt ist. Als Kunststoff wird eine Plattenpreßmasse (SMC = sheet moulded compound) verwendet, die durch Pressen in die gewünschte Form gebracht werden kann.

Demgegenüber zielt die Erfindung darauf ab, einen mehrteiligen Rahmen für ein Fahrzeug-Schiebedach oder -Schiebehebedach bereitzustellen, der sich kostengünstiger herstellen, platzsparend und mit möglichst geringem Zeitaufwand in ein Fahrzeug einbauen läßt.

Hierzu zeichnet sich nach der Erfindung ein Rahmen für ein Fahrzeug-Schiebedach oder -Schiebehebedach, der in eine in einer festen Dachfläche vorgesehenen Dachöffnung einsetzbar ist und eine Rahmenöffnung begrenzt, welcher Rahmen zwei parallel zur Längsachse des Fahrzeugs verlaufende, im Querabstand angeordnete und aus Metall bestehende Seitenteile, ein Vorderteil und wenigstens ein Querteil aufweist, wobei die Seitenteile biegesteife Antriebskabel führen, mittels welchen Führungsglieder für einen Deckel längs den Seitenteilen geführt bewegbar sind und die mit einer Antriebseinrichtung am Vorderteil zusammenarbeiten, und wobei das Vorderteil als Übergang zu den Längsteilen dienende Eckbereiche hat, dadurch aus, daß das Vorderteil als Kunststoffspritzteil ausgebildet ist, die Eckbereiche daran angeformt sind und daß in das Vorderteil Führungsrohre als Kabelführung wenigstens teilweise eingebettet sind.

Bei dem erfindungsgemäßen mehrteiligen Rahmen ist das Vorderteil aus Kunststoff gespritzt, wobei zur Führung der biegesteifen Antriebskabel Führungsrohre in die Spritzmasse des Vorderteils beispielsweise durch Einspritzen eingebettet sind. Durch diese Auslegung kann das Vorderteil gewichtsmäßig leichter ausgelegt werden, wobei als Material für das Kunststoffspritzteil insbesondere thermoplastisches Polyester oder glasmattenverstärktes Thermoplast (GMT) verwendet wird. Auch läßt sich hierdurch das Vorderteil flachbauend auslegen, so daß man im eingebauten Zustand des erfindungsgemäßen Rahmens eine größere Kopffreiheit im Fahrgastinnenraum erhält. Hierdurch erleichtern sich auch die Vormontage und die Montage des Rahmens beim Einbau in ein Fahrzeugdach. Der erfindungsgemäße Rahmen ist sowohl für ein Schiebedach als auch für eine Schiebehebedach geeignet, bei dem der Deckel zu Belüftungszwecken wenigstens an einem Ende ausstellbar ist.

Vorzugsweise verlaufen die Führungsrohre, die zweckmäßigerweise aus einer Zn-Legierung bestehen, und in denen die biegesteifen Antriebskabel am Vorderteil geführt sind, außerhalb der vom Rahmen begrenzten Rahmenöffnung. Hierdurch wird ermöglicht, daß die vom Rahmen begrenzte Rahmenöffnung möglichst große Abmessungen haben kann, um eine möglichst große Dachöffnung freilegen zu können.

Zur Verbindung der Führungsrohre am Vorderteil hat es sich gezeigt, daß es ausreicht, daß diese lediglich an mehreren Stellen in das Vorderteil eingespritzt sind. Insbesondere sind diese Führungsrohre an dem Bereich in das Vorderteil eingespritzt, an dem die biegesteife Kabel in den Führungsrohren mit einer Antriebseinrichtung zusammenarbeiten, die elektromotorisch oder mechanisch, wie mit einer Kurbel, betrieben werden kann. Somit brauchen bei dem erfindungsgemäßen Rahmen die Führungsrohre nicht vollständig von dem Kunststoffspritzteil umschlossen zu sein, sondern das Vorderteil dient lediglich als Halterung für dieselben. Hierdurch werden eine Materialersparnis und eine Gewichtseinsparung erzielt.

Vorzugsweise ist beim erfindungsgemäßen Rahmen die Auslegung derart getroffen, daß die Enden der am Vorderteil gehaltenen Führungsrohre über die Eckbereiche des Vorderteils überstehen und in die in den Seitenteilen ausgebildeten Kabelführungen steckbar sind. Bei der Montage lassen sich somit diese überstehenden Enden der Kabelführungsrohre in die Seitenteile des Rahmens einstecken, so daß die Verbindung von Vorderteil und Seitenteilen eine erforderliche Verwindungssteifigkeit und Maßhaltigkeit hat. Diese überstehenden Führungsrohrenden dienen somit als Montagehilfsmittel zum Zusammensetzen und Ausrichten der Längsteile und des Vorderteils des Rahmens.

Gemäß einer bevorzugten Ausführungsform des erfindungsgemäßen Rahmens sind in das Vorderteil und auch die Seitenteile Wasserablaufrinnen integriert, und an den Eckbereichen des Vorderteils sind Wasserabläufe, wie Wasserablaufrohre, einteilig angeformt. Somit benötigt man bei dem erfindungsgemäßen Rahmen keine gesonderten und zusätzlich zu montierenden Teile für die Wasserabführung im Bereich des Vorderteils des Rahmens, sondern alle diese Teile werden bei der Herstellung unmittelbar berücksichtigt und beim Spritzen ausgebildet. Hierdurch können insbesondere aufwendige, wasserdichte Verbindungen von wasserführenden Teilen und Wasserablaufteilen vermieden werden, da sie einteilig am Kunstoffspritzteil ausgebildet sind.

Gemäß einer bevorzugten Ausführungsform nach der Erfindung ist die Aufnahme für die Antriebseinrichtung am Vorderteil angeformt, so daß die Antriebseinrichtung, wie ein Elektromotor o.dgl. unmittelbar am Vorderteil montiert werden kann.

Zur wesentlichen Vereinfachung der Auslegung des erfindungsgemäßen Rahmens ist ferner nur ein einziges Querteil vorgesehen, das etwa in der Mitte der Seitenteile angeordnet und mit diesen zur Aussteifung verbunden ist.

Gemäß einer bevorzugten Ausführungsform nach der Erfindung sind an den hinteren Enden der Seitenteile, den wasserführenden Bereich der Seitenteile, wie die dort ausgebildete Wasserrinne, abschließende Wasserkastenendstücke angebracht. Diese Wasserkastenendstücke sind vorzugsweise als Kunststoffteile ausgebildet und insbesondere als Kunststoffspritzteile ausgelegt. Hierdurch erhält man eine weitere Gewichtsreduzierung der Rahmenteile und insbesondere brauchen an den Seitenteilen keine zusätzlichen Wasserablaufeinrichtungen in gesonderten Herstellungsschritten angebracht zu werden. Die Herstellung einer wasserdichten Verbindung der Wasserabläufe mit den Seitenteilen ist nämlich sehr arbeitsintensiv und montageaufwendig. Vorzugsweise ist an dem jeweiligen Wasserkastenendstück ein Wasserablauf, wie ein Wasserablaufrohr, angeformt, das somit ebenfalls aus Kunststoff besteht und unmittelbar bei der Herstellung der Wasserkastenendstücke berücksichtigt werden kann.

Gemäß einer bevorzugten Ausführungsform nach der Erfindung haben die Wasserkastenendstücke auch angeformte Befestigungsteile, mittels welchen diese und mit diesen verbundene Rahmenteile an einer festen Fahrzeugdachfläche angebracht werden kann. Somit haben die Wasserkastenendstücke auch eine weitere Funktion beim erfindungsgemäßen Rahmen, da sie nämlich zusätzlich Befestigungsmittel für die Verbindung mit der festen Fahrzeugdachfläche sind.

Beim erfindungsgemäßen Rahmen sind die Verbindungen der jeweiligen Einzelteile des Rahmens als Überlappungsverbindung ausgebildet, welche geklebt und zusätzlich vernietet sein können. Derartige Überlappungsverbindungen lassen sich bei der Montage relativ einfach zueinander ausrichten und insbesondere können sie ohne einen großen zusätzlichen Aufwand wasserdicht gemacht werden, so daß man keine zusätzlichen Dichtmaßnahmen an den wasserführenden Bereichen der Einzelteile des Rahmens treffen muß. Hierdurch vereinfachen sich die Herstellung und Montage erheblich. Durch die Klebung wird eine Vorfixierung bei der Montage erzielt, bevor die endgültige Verbindung mit Hilfe einer Vernietung an den Überlappungsverbindungen erfolgt.

Vorzugsweise ist das einzige Querteil beim erfindungsgemäßen Rahmen mit den Längsteilen wasserdicht vernietet, wozu vorzugsweise eine stoffschlüssige Verbindung, wie eine Tox-Verbindung, vorgesehen wird. Hierdurch lassen sich Leckstellen an der Verbindung von Querteilen und Längsteilen vermeiden.

Vorzugsweise sind beim erfindungsgemäßen Rahmen die Längsteile aus einem Leichtmetallstrangpreßprofil, insbesondere aus einem Aluminiumstrangpreßprofil hergestellt. Hierbei handelt es sich um Endlosmaterialien, welche man auf die jeweils gewünschte Länge der Längsteile zuschneiden kann. Durch die Verwendung eines Leichtmetallstrangprofils kann das Gewicht des Rahmens ohne eine Einbuße an der Steifigkeit und Festigkeit desselben reduziert werden.

Gemäß einer bevorzugten Ausgestaltungsform der Erfindung ist das Querteil zweckmäßigerweise als Blechteil aus demselben Leichtmetall wie die Längsteile ausgebildet, so daß man eine zuverlässige wasserdichte Verbindung derselben erhält. Ferner verleiht das Querteil der gesamten Anordnung die notwendige Quersteifigkeit, und die Seitenteile, längs denen die Bewegungseinrichtung des Deckels des Schiebedachs oder Schiebehebedachs verfahrbar sind, können zuverlässig parallel zueinander ausgerichtet werden, um eine möglichst genaue Parallelführung der Bewegungseinrichtung im Hinblick auf die Leichtgängigkeit der Betätigung des Schiebedachs oder Schiebehebedachs zu erzielen.

Der erfindungsgemäße Rahmen für ein Fahrzeug-Schiebedach oder - Schiebehebedach ist derart ausgelegt, daß seine Größe variabel ist, und er ist in Form eines Baukastensystems ausgelegt. Die Länge der Rahmenabmessung ist von der Länge der Seitenteile des Rahmens abhängig und das Querteil bestimmt die Rahmenbreite.

Die Erfindung wird nachstehend anhand einer bevorzugten Ausführungsform unter Bezugnahme auf die beigefügte Zeichnung näher erläutert. Darin zeigt:
- Fig. 1: eine schematische Draufsicht auf ein Fahrzeug-Schiebedach oder -Schiebehebedach nach der Erfindung,
- Fig. 2: eine perspektivische Ansicht des Rahmens und der Rahmenteile in auseinandergezogener Darstellung,
- Fig. 3: eine Schnittansicht längs der Linie III-III in Fig. 1,
- Fig. 4: eine Schnittansicht längs der Linie IV-IV in Fig. 1,
- Fig. 5: eine Schnittansicht längs der Linie V-V in Fig. 1 und
- Fig. 6: eine Schnittansicht längs der Linie VI-VI in Fig. 1.

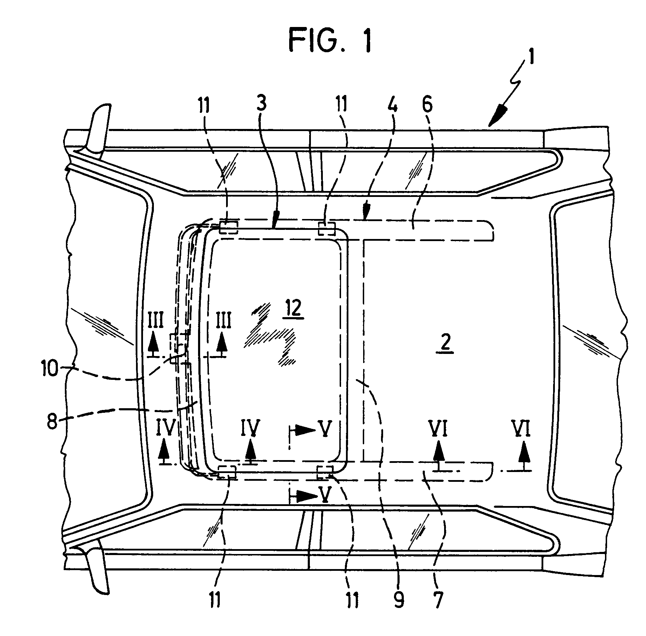

In Fig. 1 ist in einer Draufsicht ein Fahrzeugdach 1 gezeigt. In einer festen Dachfläche 2 des Fahrzeugdaches 1 ist ein insgesamt mit 3 bezeichnetes Schiebedach oder Schiebehebedach eingebaut. Das Schiebedach oder Schiebehebedach 3 umfaßt einen Rahmen 4, welcher in eine Dachöffnung 5 in der festen Dachfläche 2 eingesetzt ist. Der Rahmen 4 umfaßt zwei Seitenteile 6, 7, welche parallel zur Fahrzeuglängsachse im Abstand angeordnet sind, sowie ein Vorderteil 8 und wenigstens ein Querteil 9. Am Vorderteil 8 ist eine Antriebseinrichtung 10, wie ein Elektromotor mit einem Getriebe oder dergleichen vorgesehen, welche biegesteife Antriebskabel (nicht gezeigt) bewegt, welche mit Führungsgliedern 11 verbunden sind, und die am Vorderteil 8 und an den Seitenteile 6, 7 geführt sind. Mittels den Führungsgliedern 11 ist ein Deckel 12 längs den Seitenteilen 6, 7 geführt bewegbar. Hierdurch läßt sich der Deckel 12 wenigstens zur teilweisen Freigabe einer Dachöffnung längs den Seitenteilen 6, 7 in Fahrzeuglängsrichtung verfahren und/oder der Deckel 12 läßt sich vorzugsweise an seiner Rückseite derart ausstellen, daß er in Schräglage etwas über die feste Dachfläche 2 am hinteren Bereich übersteht und hierdurch ein Lüftungsspalt zum Rahmen 4 freigelegt wird. Das Vorderteil 8 des Rahmens 4 geht über Eckbereiche 13 in die Seitenteile bzw. Längsteile 6, 7 über.

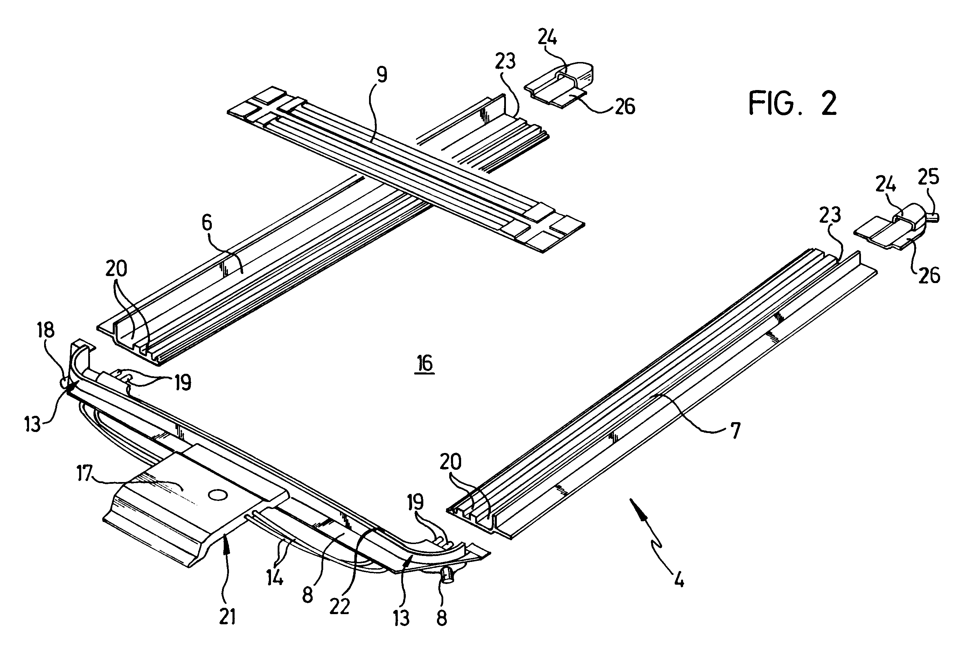

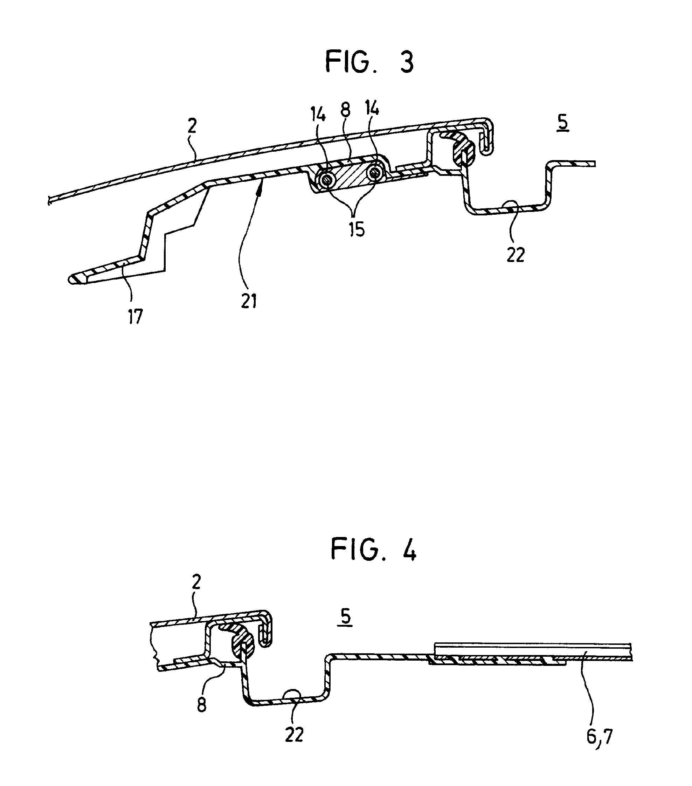

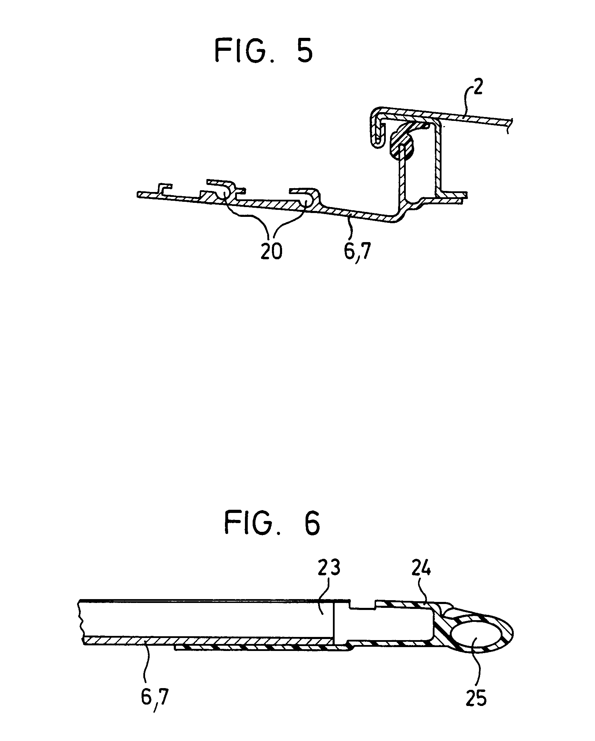

Anhand den Fig. 2 bis 6 wird eine bevorzugte Ausführungsform des Rahmens 4 näher erläutert. In Fig. 2 ist der Rahmen 4 in auseinandergezogener Darstellung zur Verdeutlichung der Einzelteile derselben dargestellt, aus denen der Rahmen 4 zusammengesetzt wird. Die beiden Seitenteile bzw. Längsteile 6, 7 des Rahmens 4 sind aus einem Leichtmetall-Stranggußprofil, vorzugsweise einem Aluminium-Stranggußprofil, hergestellt. Das Vorderteil 8 des Rahmens 4 ist als Kunststoffspritzteil ausgebildet, an welchem die Eckbereiche 13 als Übergang zu den Seitenteilen 6, 7 angeformt sind. Im Vorderteil 8 sind wenigstens teilweise eingebettet,
Führungsrohre 14 vorgesehen, in denen beispielsweise die in Fig. 3 gezeigten Antriebskabel 15 geführt sind, wobei diese Antriebskabel 15 auch in entsprechenden Ausnehmungen in den Seitenteilen 6, 7 geführt sind und mit den zugeordneten Führungsgliedern 11 (Fig. 1) verbunden sind.

Im zusammengesetzten Zustand der Seitenteile 6, 7 und des Vorderteils 8 begrenzt der Rahmen 4 eine Rahmenöffnung 16. Außerhalb dieser Rahmenöffnung 16 verlaufen die Führungsrohre 14 am Vorderteil 8. Mit 17 ist eine Halteplatte bezeichnet, an der eine nicht näher dargestellte Antriebseinrichtung angebracht werden kann, die auch eine Getriebeeinrichtung umfaßt, und die zum Bewegen der Antriebskabel 15 in den Führungsrohren 14 und den Führungen der Seitenteile 6, 7 dient.

Wie insbesondere aus Fig. 2 zu ersehen ist, umfassen die am Vorderteil 8 angeformten Eckbereiche 13 Wasserabläufe 18, welche vorzugsweise einteilig an den Eckbereichen 13 angeformt sind. Die Enden 19 der Führungsrohre 14, welche an mehreren beabstandeten Stellen in das Vorderteil 8 eingespritzt sein können, stehen an den Eckbereichen 13 über und können in die entsprechenden Führungskanäle 20 an den Seitenteilen 6, 7 eingesteckt werden, so daß ein glatter Übergang zwischen den Enden 19 der Führungsrohre 4 und den Führungskanälen 20 in den Seitenteilen 6, 7 vorhanden ist. Die Halteplatte 17 dient als Aufnahme 21 für die in Fig. 1 schematisch gezeigte Antriebseinrichtung 10. Am Vorderteil 8 ist ferner auch die vordere Wasserrinne 22 ausgebildet.

Es ist ein einziges Querteil 9 etwa in der Mitte der Längsteile bzw. Seitenteile 6, 7 vorgesehen. Dieses Querteil 9 kann aus Stahlblech oder Aluminiumblech ausgebildet sein und dient zur Querversteifung des aus mehreren Teilen zusammengesetzten Rahmens 4.

An den hinteren Enden der Seitenteile 6, 7 sind Wasserkastenendstücke 24 angebracht, welche aus Kunststoff, vorzugsweise mittels Spritzgießen, hergestellt sind. Diese Wasserkastenendstücke 24 bilden den hinteren Abschluß des wasserführenden Bereichs der Seitenteile 6, 7.

An diesen Wasserkastenendstücken 24 sind Wasserabläufe 25 angeformt. Die Wasserkastenendstücke 24 umfassen ferner Befestigungsteile 26, wie laschenförmige Fortsätze u.dgl., mittels welchen eine feste Verbindung mit der festen Dachfläche 2 hergestellt werden kann.

Wenn die einzelnen Teile, wie die Seitenteile 6, 7, das Vorderteil 8 und das Querteil 9 - wie in Fig. 1 gezeigt - zu dem Rahmen 4 zusammengesetzt sind, sind alle Verbindungsstellen als Überlappungsverbindungen ausgelegt, welche geklebt und zusätzlich vernietet sein können. Das Querteil 9 ist vorzugsweise mit den Seitenteilen 6, 7 wasserdicht vernietet, wozu eine stoffschlüssige Verbindung durch Ineinanderprägung der sich überlappenden Teile (Querteil 9 mit Seitenteil 6 bzw. 7) (Tox-Verbindung) vorgesehen sein kann. Das als Kunststoffspritzteil ausgebildete Vorderteil 8 ist vorzugsweise aus thermoplastischem Polyester oder glasmattenverstärktem Thermoplast (GMT) hergestellt.

Die erfindungsgemäße Auslegung des Rahmens 4 stellt eine Art Baukastensystem zum Zusammensetzen des Rahmens 4 bereit, dessen Größe variabel gestaltet und an den jeweils gewünschten Fahrzeugtyp angepaßt werden kann. Da die Seitenteile 6,7 als Strangpreßprofilteil ausgelegt sind, können sie von der Endlosware auf die jeweils gewünschte Länge zugeschnitten werden. Auch läßt sich eine flexible Anpassung an die jeweils gewünschte Breite erzielen, da diese einerseits von dem Querteil 9 und andererseits von dem Vorderteil 8 abhängig ist. Der Gesamtverbund der Einzelteile des Rahmens 4 ist durch die überlappenden Verbindungen und die Steckverbindungen derart beschaffen, daß der Rahmen 4 insgesamt gesehen die erforderliche Verwindungssteifigkeit und Maßhaltigkeit hat. Da sich die Einzelteile des Rahmens 4 aus relativ preisgünstigen und vorfertigbaren Materialien herstellen lassen, lassen sich die Gesamtkosten für den Rahmen 4 reduzieren, und insbesondere ermöglicht das Baukastensystem eine weitgehend große Gestaltungsfreiheit im Hinblick auf die Abmessungen des Rahmens 4 des Schiebedachs oder Schiebehebedachs 3. Dennoch ist die Auslegung des Rahmens 4 derart getroffen, daß ein zuverlässiger Parallellauf der Führungsglieder 11 bei der Bewegung des Deckels 12 gewährleistet ist. Auch läßt sich der Rahmen 4 relativ einfach montieren, da die Seitenteile 6, 7 mit dem Vorderteil 8 über die Steckverbindung der vorstehenden Enden 19 der Führungsrohre 14 einen losen Zusammenhalt haben, und dann das Querteil 9 zur Querversteifung geordnet und entsprechend an den Seitenteilen 6, 7 befestigt werden kann. Die Wasserkastenendstücke 24 lassen sich dann an den hinteren Enden 23 der Seitenteile 6, 7 anbringen und diese können vorzugsweise ebenfalls aus einem Kunststoffmaterial hergestellt sein, um das Gesamtgewicht des Rahmens 4 einerseits zu reduzieren und andererseits die wasserführenden Bereiche des Rahmens 4 aus möglichst korrosionsbeständigem Kunststoffmaterial herzustellen.

Aus den Fig. 3 bis 6 sind ferner noch nähere Einzelheiten der Befestigung des Rahmens 4 an der festen Dachfläche 2 des Fahrzeugdachs 1 sowie Einzelheiten der Profilgestaltung des Vorderteils 8, der Seitenteile 6, 7 und der Wasserkastenendstücke 24 verdeutlicht.

Selbstverständlich ist die Erfindung nicht auf die voranstehend beschriebenen Einzelheiten der bevorzugten Ausführungsformen der Erfindung beschränkt, sondern es sind zahlreiche Abänderungen und Modifikationen möglich, die der Fachmann im Bedarfsfall treffen wird, ohne den Erfindungsgedanken zu verlassen. So kann beispielsweise die Verbindung der jeweiligen Teile des Rahmens 4 auch in Kombination einer Überlappungs-Niet- und Klebeverbindung ausgelegt sein. Gegebenenfalls können die Einzelteile des Rahmens 4 auch aus anderen als voranstehend beschriebenen Materialien hergestellt sein, so daß die voranstehenden Ausführungen lediglich als eine bevorzugte Materialkombination anzusehen sind.

### Bezugszeichen

- 1: Fahrzeugdach insgesamt
- 2: Feste Dachfläche
- 3: Schiebedach oder Schiebehebedach insgesamt
- 4: Rahmen
- 5: Dachöffnung
- 6: Seitenteil (Längsteil)
- 7: Seitenteil (Längsteil)
- 8: Vorderteil
- 9: Querteil
- 10: Antriebseinrichtung
- 11: Führungsglieder
- 12: Deckel
- 13: Eckbereiche
- 14: Führungsrohre
- 15: Antriebskabel
- 16: Rahmenöffnung
- 17: Halteplatte
- 18: Wasserabläufe
- 19: Enden der Führungsrohre 14
- 20: Führungskanäle in den Seitenteilen 6, 7
- 21: Aufnahme für die Antriebseinrichtung
- 22: Vordere Wasserrinne
- 23: Hintere Enden der Seitenteile 6, 7
- 24: Wasserkastenendstücke
- 25: Wasserabläufe an den Wasserkastenendstücken 24
- 26: Befestigungsteile

## Patentansprüche

1. Rahmen für ein Fahrzeug-Schiebedach oder -Schiebehebedach (3), der in eine in einer festen Dachfläche (2) eines Fahrzeugs vorgesehene Dachöffnung (5) einsetzbar ist und eine Rahmenöffnung (16) begrenzt, welcher Rahmen (4) zwei parallel zur Längsachse des Fahrzeugs verlaufende, im Querabstand angeordnete und aus Metall bestehende Seitenteile (6, 7), ein Vorderteil (8) und wenigstens ein Querteil (9) aufweist, wobei die Seitenteile (6, 7) biegesteife Antriebskabel (15) führen, mittels welchen Führungsglieder (11) für einen Deckel (12) längs den Seitenteilen (6, 7) geführt bewegbar sind, und die mit einer Antriebseinrichtung (10) am Vorderteil (8) zusammenarbeiten, und wobei das Vorderteil (8) als Übergang zu den Seitenteilen (6, 7) Eckbereiche (13) aufweist, dadurch **gekennzeichnet,** daß das Vorderteil (8) als Kunststoffspritzteil ausgebildet ist, an das die als Übergang zu den Seitenteilen (6, 7) dienenden Eckbereiche (13) angeformt sind, und daß in das Vorderteil (8) Führungsrohre (14) als Kabelführungen wenigstens teilweise eingebettet sind.

2. Rahmen nach Anspruch 1, dadurch gekennzeichnet, daß die Führungsrohre (14) am Vorderteil (8) außerhalb der vom Rahmen (4) begrenzten Rahmenöffnung (16) verlaufen.

3. Rahmen nach Anspruch 2, dadurch gekennzeichnet, daß die Führungsrohre (14) an mehreren beabstandeten Stellen in das Vorderteil (8) eingespritzt sind.

4. Rahmen nach einem der Ansprüche 1 bis 3, dadurch gekennzeichnet, daß die Enden (19) der Führungsrohre (14) über die Eckbereiche (13') des Vorderteils (8 überstehen und in Kabelführungen (20) in den Seitenteilen (6, 7) steckbar sind.

5. Rahmen nach einem der Ansprüche 1 bis 4, dadurch gekennzeichnet, daß an den Eckbereichen (13) des Vorderteils (8) Wasserabläufe (18) einteilig angeformt sind.

6. Rahmen nach einem der Ansprüche 1 bis 5, dadurch gekennzeichnet, daß eine Aufnahme (21) für die Antriebseinrichtung (10) am Vorderteil (8) angeformt ist.

7. Rahmen nach einem der vorangehenden Ansprüche, dadurch gekennzeichnet, daß am Vorderteil (8) die vordere Wasserrinne (22) ausgebildet ist.

8. Rahmen nach einem der vorangehenden Ansprüche, dadurch gekennzeichnet, daß ein einziges Querteil (9) etwa in der Mitte der Seitenteile (6,7) angeordnet ist.

9. Rahmen nach einem der vorangehenden Ansprüche, dadurch gekennzeichnet, daß an den hinteren Enden (23) der Seitenteile (6, 7) den wasserführenden Bereich der Seitenteile (6, 7) abschließende Wasserkastenendstücke (24) angebracht sind.

10. Rahmen nach Anspruch 9, dadurch gekennzeichnet, daß die Wasserkastenendstücke (24) aus Kunststoff, vorzugsweise durch Spritzen, hergestellt sind.

11. Rahmen nach Anspruch 9 oder Anspruch 10, dadurch gekennzeichnet, daß ein Wasserablauf (25) am jeweiligen Wasserkastenendstück (24) angeformt ist.

12. Rahmen nach einem der Ansprüche 9 bis 11, dadurch gekennzeichnet, daß die Wasserkastenendstücke (24) Befestigungsteile (26) für die Befestigung an der festen Fahrzeugdachfläche (2) aufweisen.

13. Rahmen nach einem der vorangehenden Ansprüche, dadurch gekennzeichnet, daß die Verbindungen der Teile (6, 7, 8, 9, 24) des Rahmens (4) als Überlappungsverbindungen ausgebildet sind.

14. Rahmen nach Anspruch 13, dadurch gekennzeichnet, daß die Überlappungsverbindungen geklebt und zusätzlich vernietet sind.

15. Rahmen nach Anspruch 8, dadurch gekennzeichnet, daß das Querteil (9) mit den Seitenteilen (6, 7) wasserdicht vernietet ist.

16. Rahmen nach Anspruch 15, dadurch gekennzeichnet, daß zum wasserdichten Verbinden eine stoffschlüssige Verbindung vorgesehen ist.

17. Rahmen nach einem der vorangehenden Ansprüche, dadurch gekennzeichnet, daß die Seitenteile (6, 7) aus einem Leichtmetallstrangpreßprofil hergestellt sind.

18. Rahmen nach Anspruch 17, dadurch gekennzeichnet, daß das Leichtmetall Aluminium ist.

19. Rahmen nach Anspruch 17 oder 18 in Verbindung mit Anspruch 8, dadurch gekennzeichnet, daß das Querteil (9) ein Metallblechteil, vorzugsweise ein Leichtmetallblechteil und insbesondere ein Aluminiumblechteil ist.

20. Rahmen nach einem der vorangehenden Ansprüche, dadurch gekennzeichnet, daß das das Vorderteil (8) bildende Kunststoffspritzteil aus thermoplastischem Polyester oder glasmattenverstärktem Thermoplast (GMT) hergestellt ist.

## Claims

1. A frame for a vehicle sliding roof or a sliding-lifting roof (3) adapted for insertion into a roof opening (5) provided in a fixed roof surface (2) of a vehicle and defining a frame opening (16), said frame (4) having, extending parallel with the longitudinal axis of the vehicle and spaced from each other transversely and consisting of metal, two side parts (6, 7), a front part (8) and at least one transverse part (9), the side parts (6, 7) guiding flexurally rigid drive cables (15) by means of which guide members (11) for a cover (12) are adapted for guided movement along the side parts (6, 7) and which cooperate with a drive means (10) on the front part (8), the front part (8) having corner portions (13) providing a transition to the side parts (6, 7), characterised in that the front part (8) is constructed as an injection moulded synthetic plastics part onto which the corner parts (13) which serve as the transition to the side parts (6, 7) are integrally moulded and in that to serve as cable guides, guide tubes (14) are at least partially embedded in the front part (8).

2. A frame according to Claim 1, characterised in that the guide tubes (14) extend on the front part (8) outside of the frame opening (16) bounded by the frame (4).

3. A frame according to Claim 2, characterised in that the guide tubes (14) are injection moulded into the front part (8) at a plurality of spaced apart locations.

4. A frame according to one of Claims 1 to 3, characterised in that the ends (19) of the guide tubes (14) project beyond the corner parts (13') of the front part (8) and are insertable into cable guides (20) in the lateral parts (6, 7).

5. A frame according to one of Claims 1 to 4, characterised in that water drains (18) are integrally formed into the corner parts (13) of the front part (8).

6. A frame according to one of Claims 1 to 5, characterised in that a mounting (21) for the drive means (10) is integrally formed on the front part (8).

7. A frame according to one of the preceding Claims, characterised in that the front water gutter (22) is constructed on the front part (8).

8. A frame according to one of the preceding Claims, characterised in that a single transverse part (9) is disposed substantially in the middle of the side parts (6, 7).

9. A frame according to one of the preceding Claims, characterised in that water collector end pieces (24) defining the water conducting area of the side parts (6, 7) are provided at the rear ends (23) of the side parts (6, 7).

10. A frame according to Claim 9, characterised in that the water collector end pieces (24) are produced from synthetic plastics material, preferably by injection moulding.

11. A frame according to Claim 9 or Claim 10, characterised in that a water drain (25) is integrally formed on a respective water collector end piece (24).

12. A frame according to one of Claims 9 to 11, characterised in that the water collector end pieces (24) have mounting parts (26) for fitment on the fixed vehicle roof surface (2).

13. A frame according to one of the preceding Claims, characterised in that the connections between the parts (6, 7, 8, 9, 24) of the frame (4) are constructed lap joint connections.

14. A frame according to Claim 13, characterised in that the lap joint connections are secured by adhesive and are additionally riveted.

15. A frame according to Claim 8, characterised in that the transverse part (9) is riveted to the side parts (6, 7) in waterproof manner.

16. A frame according to Claim 15, characterised in that a continuous material flow connection is provided for making the waterproof connection.

17. A frame according to one of the preceding Claims, characterised in that the side parts (6, 7) are produced from a light metal extrusion profile material.

18. A frame according to Claim 17, characterised in that the light metal is aluminium.

19. A frame according to Claim 17 or 18 in conjunction with Claim 8, characterised in that the transverse part (9) is a sheet metal part, preferably a light sheet metal part and is in particular a sheet aluminium part.

20. A frame according to one of the preceding Claims, characterised in that the injection moulded synthetic plastics part which forms the front part (8) is produced from thermoplastics polyester or glass mat reinforced thermoplastic material (GMT).

## Revendications

1. Cadre pour un toit coulissant ou un toit coulissant et basculant (3) de véhicule qui peut être monté dans une ouverture (5) prévue dans une surface fixe (2) du toit d'un véhicule et délimite une ouverture de cadre (16), lequel cadre (4) présente deux parties latérales (6, 7) s'étendant parallèlement à l'axe longitudinal du véhicule, disposées à distance l'une de l'autre dans le sens transversal et réalisées en métal, une pièce avant (8) et au moins une pièce transversale (9), les pièces latérales (6, 7) guidant des câbles d'entraînement résistant à la flexion, au moyen desquels on peut déplacer des organes de guidage (11) pour un couvercle (12) le long des parties latérales (6, 7) et qui coopèrent avec un dispositif d'entraînement (10) à la partie avant (8), et dans lequel la partie avant (8) présente des zones d'angle (13) servant de transition vers les parties latérales (6, 7), cadre caractérisé en ce que la partie avant (8) est formée comme une partie en matière plastique injectée, sur laquelle sont formées les zones d'angle (13) servant de transition vers les parties latérales (6, 7) et en ce que dans la partie avant (13) sont noyés des tubes de guidage (14) en tant que guidages de câbles au moins partiellement.

2. Cadre selon la revendication 1, caractérisé en ce que les tubes de guidage (14) s'étendent sur la partie avant (8) en dehors de l'ouverture délimitée par le cadre (4).

3. Cadre selon la revendication 2, caractérisé en ce que les tubes de guidage (14) sont injectés en plusieurs endroits distants les uns des autres dans la pièce avant (8).

4. Cadre selon l'une des revendications 1 à 3, caractérisé en ce que les extrémités (19) des tubes de guidage (14) dépassent au-delà des zones d'angle (13') de la partie avant (8) et peuvent être enfichées dans les guidages de câble (20) dans les parties latérales (6, 7).

5. Cadre selon l'une des revendications 1 à 4, caractérisé en ce que sur les zones d'angle (13) de la partie avant (8) sont formés des écoulements (18) d'une seule pièce.

6. Cadre selon l'une des revendications 1 à 5, caractérisé en ce qu'une pièce réceptrice est formée pour le dispositif d'entraînement (10) sur la pièce avant (8).

7. Cadre selon l'une des revendications précédentes, caractérisé en ce qu'à la partie avant (8) est constituée la gouttière antérieure (22).

8. Cadre selon l'une des revendications précédentes, caractérisé en ce qu'une pièce transversale unique (9) est disposée à peu près au milieu des pièces latérales (6, 7).

9. Cadre selon l'une des revendications précédentes, caractérisé en ce qu'aux extrémités arrière (23) des parties latérales (6, 7) sont disposées des pièces terminales de collecteurs d'eau (24) fermant la zone d'écoulement d'eau des parties latérales (6, 7).

10. Cadre selon la revendication 9, caractérisé en ce que les pièces terminales de collecteurs d'eau (24) sont réalisées en matière plastique, de préférence par injection.

11. Cadre selon la revendication 9 ou 10, caractérisé en ce qu'on forme un écoulement d'eau (25) sur la pièce correspondante terminale de collecteur d'eau (24).

12. Cadre selon l'une des revendications 9 à 11, caractérisé en ce que les pièces terminales de collecteurs d'eau (24) présentent des pièces de fixation (26) pour la fixation sur la surface fixe de toit de véhicule (2).

13. Cadre selon l'une des revendications précédentes, caractérisé en ce que les liaisons des parties (6, 7, 8, 9, 24) du cadre (4) sont constituées comme des liaisons de recouvrement.

14. Cadre selon la revendication 13, caractérisé en ce que les liaisons de recouvrement sont collées et en plus sont rivetées.

15. Cadre selon la revendication 8, caractérisé en ce que la partie transversale (9) est rivetée avec les parties latérales (6, 7) de façon étanche à l'eau.

16. Cadre selon la revendication 15, caractérisé en ce que l'on prévoit une liaison à interpénétration de matière pour établir une liaison étanche à l'eau.

17. Cadre selon l'une des revendications précédentes, caractérisé en ce que les parties latérales (6, 7) sont réalisées en un profilé extrudé en métal léger.

18. Cadre selon la revendication 17, caractérisé en ce que le métal léger est de l'aluminium.

19. Cadre selon la revendication 17 ou 18 en liaison avec la revendication 8, caractérisé en ce que la pièce transversale (9) est une pièce en tôle métallique, de préférence une pièce en tôle en métal léger et en particulier une pièce en tôle d'aluminium.

20. Cadre selon l'une des revendications précédentes, caractérisé en ce que la partie en matière plastique injectée formant la partie antérieure (8) est réalisée en polyester thermoplastique ou en thermoplastique renforcé par des fibres de verre (GMT).
